(19)

Europäisches
Patentamt
European
Patent Office
Office européen
des brevets

(11)     **EP 3 376 400 A1**

(12)     **EUROPEAN PATENT APPLICATION**

(43) Date of publication:
**19.09.2018 Bulletin 2018/38**

(21) Application number: **17160966.2**

(22) Date of filing: **14.03.2017**

(51) Int Cl.:
*G06F 17/27* (2006.01)     *G06N 3/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **FUJITSU LIMITED**
**Nakahara-ku**
**Kawasaki-shi**
**Kanagawa 211-8588 (JP)**

(72) Inventor: **HU, Bo**
**Winchester, Hampshire SO23 7DT (GB)**

(74) Representative: **Haseltine Lake LLP**
**Lincoln House, 5th Floor**
**300 High Holborn**
**London WC1V 7JH (GB)**

(54)     **DYNAMIC CONTEXT ADJUSTMENT IN LANGUAGE MODELS**

(57)     Computer-implemented method, method, apparatus, and program for generating dynamic context-based word vectors. Text data is obtained from websites and written to a local storage as individual text data instances with respective metadata. A neural language model is trained in respect of each text data instance. Queries are received for which word vectors are required in formulating a response. Word vector representation of query string is requested, with a query scope of multiple text data instances. The multiple text data instances are combined in a weighted manner with weightings determined by metadata features such as publication date and publication reputation. Resultant word vectors are more significantly influenced by word usage in text data instances with metadata features indicating greater relevance, such as more recent publication or better reputation.

FIGURE 1

**Description**

The invention lies in the field of language modelling and in particular relates to the training and use of neural language models.

Machines cannot understand semantics. However, statistical techniques can quantify certain information that can assist machines in comparing words and terms and deciding when terms may have the same or similar meaning or be used interchangeably. This is an important research and technology challenge in the fields of Internet of Things and artificial intelligence. Existing statistical and probabilistic language models take a sufficiently large text corpus, process the text with basic natural language processing techniques, and compute for each word in the corpus vocabulary a real-valued vector. Effectively, the corpus vocabulary is projected onto a high dimensional space where each word in the vocabulary becomes a point in the vector space.

Recently, high performance algorithms have been developed. On the other hand, there is yet to be a breakthrough on modelling and quantifying classical lexical semantics, including the semantic web enhanced approaches. The combination of these gives rise to increased popularity of tools such as Word2Vec and GloVe. Thus far, great results have been achieved in healthcare/life science and social monitoring. The advantages and disadvantages are equally evident. On the one hand, highly efficient algorithms and power computers allow us to process much larger datasets comparing to other approaches. The amount of data can to some extent compensate the inaccurate nature of the approach and thus present a less biased language model. On the other hand, primarily only word proximity is considered which makes otherfeatures not easy to reflect in resultant word vectors. This can be particularly problematic in application areas where knowledge changes rapidly and where quality of data varies significantly.

Distributional language modelling is gaining popularity recently due to the needs of tackling extremely large text corpora. The application of such techniques conventionally utilises only the proximity of words, largely ignoring many linguistic features such as POS (part of speech) and the semantics of words. This underutilises some key information in the resultant distributional model.

It is desirable to implement distributional language modelling in a manner which takes into account information relating to the use of words in addition to their distribution.

Embodiments include a computer-implemented method comprising: storing plural text data instances, each text data instance among the plural text data instances being a published text document or documents from a text data source; storing metadata in respect of each text data instance among the plural text data instances; obtaining an untrained language model comprising a plurality of adjustable weights and adjustable biases; in respect of each individual text data instance among the plural text data instances, training the untrained language model by adjusting the adjustable weights and biases with input word sequences from the respective text data instance to obtain an instance language model that is configured to generate a word vector representation of an input text string, and storing the instance language model in association with the respective text data instance; receiving a request for a word vector representation of a target text string in a set of text data instances from among the plural text data instances; responding to the request by: in respect of each individual text data instance among the set, calculating an instance weighting from the respective metadata; and either or both of: a first response, comprising obtaining a word vector representation of the query string from the instance language model stored in association with each text data instance among the set, and calculating a weighted average of the obtained word vector representations by using the respective instance weighting to weigh the word vector representation from each text data instance among the set, and outputting the weighted average in response to the request; and a second response, comprising combining the instance language model for each text data instance among the set to obtain a set language model, and retraining the set language model by adjusting the adjustable weights and biases with input word sequences from the set of text data instances to obtain a retrained set language model, and outputting a word vector representation of the query string generated by the retrained set neural language model in response to the request.

Which from among the first and second responses is performed is at least partially dependent on resource availability in the implementing computer apparatus and service requirements associated with the request.

Advantageously, embodiments tailor language models for individual text data instances, and use metadata associated with the text data instances to combine the language models tailored to the individual text data instances in responding to requests. In this manner, word correlations are of enhanced importance in some text data instances compared with others, dependent on metadata, and thus different text data instances can be emphasised in the word vector representation. For example, the metadata may indicate publication date of the text data instance, so that a time decaying factor may be taken into account. Changing use of language can be accommodated in the word vector representation.

The metadata may be metadata characterising publication details of the respective text data instance.

The untrained language model may have a predefined network structure, and thus the instance language models and the set language model also all have the same predefined network structure.

The word correlations captured in the word vector representations output by embodiments are more tailored to a request than in standard distributional language models by allowing specification of particular data instances (which may be specified by a range of a value represented in the metadata), which the embodiments attribute different weightings to according to their respective metadata, thus yielding a word vector representation which more accurately reflects the use of language amongst the particular text data instances.

For instance, in the medical domain, textual data published over several decades ago may be less informative and useful comparing to current publications. Embodiments adjust importance of language models to reflect such new factors.

A word vector is composed of real numeric values. The dimensionality is predefined for each instance of the computer-implemented method but is configurable as an input or argument to embodiments, and is a property of the predefined network structure. Word vectors provide a basis for comparison between terms. Such comparisons have many potential uses, particularly in the semantic web. As an example, hypothesis generation may be carried out by identifying similar word vectors from a corpus of published documents. Word vectors enable patterns and relationships to be recognised that are not readily available to human readers, and to use those patterns and relationships to gather scientific evidence and to facilitate decision making.

Training the untrained language model may comprise adjusting the adjustable weights and biases (which may be collectively referred to as adjustable parameters) to maximise a cost function, the cost function quantifying the likelihood of an input string of words (training sentence). Embodiments may, for example, utilise a gradient descent training technique, in which the adjustable parameters are updated by taking steps proportional to the negative of the gradient of the cost function.

It is noted in embodiments that the neural language models and trained and untrained versions thereof may be neural probabilistic language models in embodiments.

Embodiments also include a medical diagnosis method, comprising: the above-recited computer implemented method, wherein the text data source is a corpus of medical publications and the text data instances are articles and/or journal issues from among the corpus; and the target text string is a medical symptom or list of medical symptoms and is specified in a received query. The medical diagnosis method further comprises: calculating a similarity between the word vector representation of the medical symptom or list of medical symptoms with a word vector representation of each of a plurality of diagnosis candidates, obtained from the same set of text data instances by, in the case of obtaining the word vector representation of the medical symptom or list of medical symptoms by the first response, repeating the first response in respect of each diagnosis candidate among the plurality of diagnosis candidates as the target text string, and in the case of obtaining the word vector representation of the medical symptom or list of medical symptoms by the second response, repeating the second response in respect of each diagnosis candidate among the plurality of diagnosis candidates as the target text string, and outputting the diagnosis candidate having the highest calculated similarity as a diagnosis.

In medical diagnosis examples, the instance weightings may be calculated by a fixed value multiplied by a time decay factor determined by elapsed time between receiving the query (a query being a request for a diagnosis based on specified/submitted symptoms) and a publication date of the text data instance specified in the respective metadata).

The plurality of diagnosis candidates may be a predefined list of medical diagnoses, in accordance with, for example, the ICD-10 classification system.

In order to provide high quality health care, it is vitally important for clinical professionals to acquire the latest developments in areas related to his/her expertise. Research and clinical trial outcomes have long been serving as a source for constructing and updating knowledge repositories which may then be used in everyday practice by physicians.

In the medical domain, a key knowledge is the relationships among domain entities (being diseases, symptoms and treatments). Thus far, machine learning techniques have been used to discover these relationships. The inefficiency of existing approaches is that data sources are considered as static and the trained models do not reflect the timeliness of knowledge. For instance, stomach ulcers have been partially attributed to bacteria and treated with anti-biotics in recently years. Before such information can be formally adopted in national/regional clinical guidelines, it is beneficial for physicians to grasp such knowledge as it develops. Such benefits will require constantly updating trained models based on the addition to stored text data instances in a knowledge base. In embodiments, the model training process is incremental and continuous, rather than being static.

Embodiments provide a time dimension to the learnt language models and allow fragments of data being used differently so as to increase and decrease the effect of the "time stamped" data in the overall language model. Based on the same method, it is also possible to usher in other data set specific metadata, e.g. data source reputation.

The trained language model and the word vectors generated during the training may serve as a knowledge base that facilitates everyday patient management and assists in medical diagnosis, as well as serve the secondary purposes such as training and education. In medical systems, embodiments enable a practitioner to situate answers in a particular time frame and with respect to a particular data sources (e.g. pubmed v.s. patient.com). The added dimension (being time and reputation) that regulates each model trained on fragments of data helps to ensure that focused answers are delivered.

Embodiments also include an apparatus comprising: a memory; a processor coupled to the memory and configured to execute a process comprising: storing plural text data instances, each text data instance among the plural text data instances being a published text document or documents from a text data source; storing metadata in respect of each text data instance among the plural text data instances; obtaining an untrained language model, the untrained language model being a neural language model comprising a plurality of adjustable weights and adjustable biases; in respect of each individual text data instance among the plural text data instances, training the untrained language model by adjusting the adjustable weights and biases with input word sequences from the respective text data instance to obtain an instance language model that is configured to generate a word vector representation of an input text string, and storing the instance language model in association with the respective text data instance; receiving a request for a word vector representation of a target text string in a set of text data instances from among the plural text data instances; responding to the request by: in respect of each individual text data instance among the set, calculating an instance weighting from the respective metadata; and either or both of: a first response, comprising obtaining a word vector representation of the query string from the instance language model stored in association with each text data instance among the set, and calculating a weighted average of the obtained word vector representations by using the respective instance weighting to weigh the word vector representation from each text data instance among the set, and outputting the weighted average in response to the request; and a second response, comprising combining the instance language model for each text data instance among the set to obtain a set language model, and retraining the set language model by adjusting the adjustable weights and biases with input word sequences from the set of text data instances to obtain a retrained set language model, being a neural language model having the predefined network structure, and outputting a word vector representation of the query string generated by the retrained set neural language model in response to the request.

Embodiments also include a medical diagnosis apparatus, comprising the apparatus recited above, wherein: the text data source is a corpus of medical publications and the text data instances are articles and/or journal issues from among the corpus; the target text string is a medical symptom or list of medical symptoms and is specified in a received query; the process executed by the processor further comprising: calculating a similarity between the word vector representation of the medical symptom or list of medical symptoms with a word vector representation of each of a plurality of diagnosis candidates, obtained from the same set of text data instances by, in the case of obtaining the word vector representation of the medical symptom or list of medical symptoms by the first response, repeating the first response in respect of each diagnosis candidate among the plurality of diagnosis candidates as the target text string, and in the case of obtaining the word vector representation of the medical symptom or list of medical symptoms by the second response, repeating the second response in respect of each diagnosis candidate among the plurality of diagnosis candidates as the target text string, and outputting the diagnosis candidate having the highest calculated similarity as a diagnosis.

Embodiments may include software, such as a computer program, which when executed by a computing apparatus, causes the computing apparatus to perform a method embodying the present invention. Such a computing apparatus may be a computing device, such as a server or other computer, or may be a network of interconnected computing devices operating in collaboration with one another. The software or computer program may be stored on a computer readable medium. The computer readable medium may be a non-transitory computer-readable medium.

Embodiments will now be described, purely by way of example, with reference to the accompanying drawings, in which:-

Figure 1 illustrates a method;
Figure 2 illustrates a system;
Figure 3 illustrates a neural network;
Figure 4 illustrates a process of training a neural network;
Figure 5 illustrates a process of receiving and responding to a query;
Figure 6 illustrates inputs to a projection layer of a neural network in a retraining process;
Figure 7 illustrates a text data instance obtaining process;
Figure 8 illustrates text data instance pre processing;
Figure 9 illustrates a medical diagnosis method; and
Figure 10 illustrates a hardware configuration.

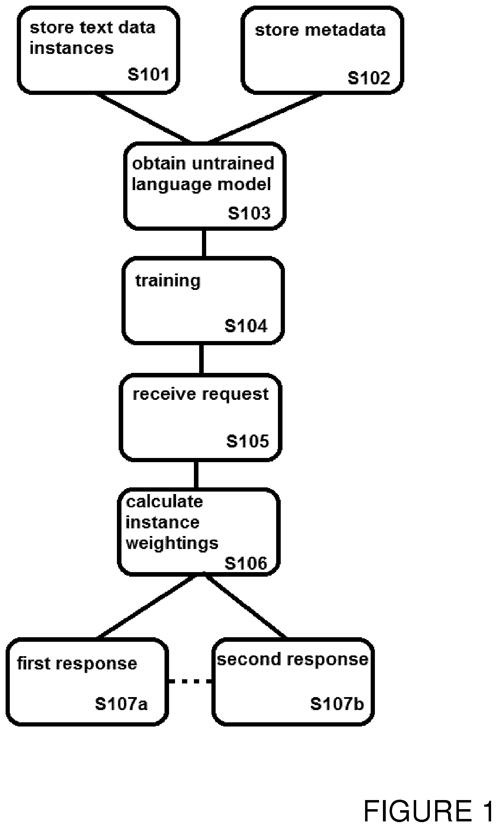

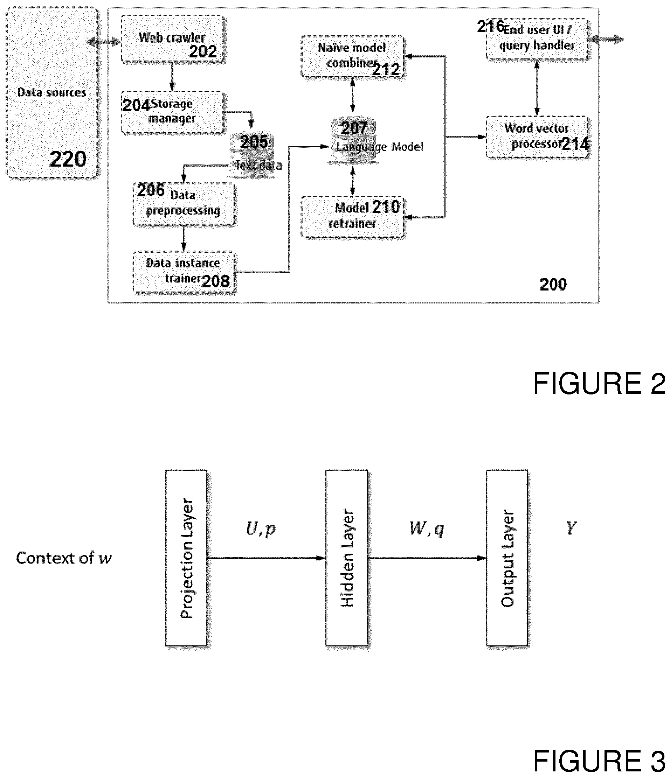

Figure 1 illustrates a method of an embodiment, which may be computer-implemented. At step S101 text data instances are stored, each text data instance among the plural text data instances may be a published text document or documents from a text data source. In the system 200 of Figure 2, the storing of steps S101 and S102 is performed by the storage manage 204. Each text data instance may be a text document or corpus of text documents. The plural of text data instances may be or include a time series of versions of a website or other publication, each version in the time series being a separate text data instance. Step S101 may be preceded by a step of extracting the text data instance from a data source (i.e. downloading the text content of a website) and optionally also pre-processing of the extracted text. For example, as shown in the system 200 of Figure 2, the extracting/obtaining of text data instances from data sources 220 is performed by the web crawler 202 and the pre-processing of text data instances is performed by the data preprocessing processor 206. The pre-processing may be performed after storage and before the training S104.

The published text of a data source may be stored as an open data source, and the extracting comprises accessing or querying the open data source to obtain the published text as a text data instance. The extracting may also be referred to as an obtaining step.

The published text may be academic research papers, for example, published in academic journals. Wherein the academic research papers may belong to a particular scientific domain, for example, medicine, physics, or agriculture.

Step S102 comprises storing metadata in respect of each text data instance among the plural text data instances, the metadata characterising publication details of the respective text data instance. It may be that a text data instance is a publication of an academic journal, and the corresponding publication date of the academic journal is stored as the metadata for the text data instance. The metadata may further comprise a value representing the reputation of the academic journal and other desired information characterizing the text data instance.

Academic journals may be accessed via an online corpus. As an example, the online corpus of published documents may be the MEDLINE database, which is searchable through PubMed, or PubMedCentral. Other corpus of published documents include NICE and openFDA.

It may be the case that the plurality of published text data instances were published in respective research journals, in which case the obtaining includes obtaining, as metadata, a name of the research journal in which the published document was published, and the instance weightings are moderated by a journal scalar value, the journal scalar value being a value obtained by applying a trust model metric to the named research journal of the respective published text data instance.

The trust model metric may be borrowed from a related discipline, such as software agent, social network analysis, etc.

Alternatively, a user may be able to attribute rankings or confidence values to different publications, which are used to moderate the corresponding instance weightings so that instance language models of text data instances from higher ranked or higher confidence journals are afforded a relatively greater weighting in the combination of language models.

Advantageously, embodiments enable associations demonstrated through word vectors computed in non-peer-reviewed sources, that are less reliable comparing to reputable sources, to be given less influence on the resultant combined (i.e. set) language models.

Obtaining text data instances and metadata such as publication dates is performed and the obtained data written to a storage area. The text data instance is a representation of the published text of a published document or website, and is in the form of a document or string or text object, or in some other electronic format for capturing alphanumeric information. For example, the obtained text data instance may be an issue of a scientific, medical, and/or academic journal. The publication date may be the date of the issue of the journal. The text data instance may be a copy of the complete published text of the journal issue, or may be a section or sections thereof (such as abstract, title & abstract).

The obtaining may comprise receiving, from an online publication corpus, the entire published text of the journal issue, and processing the entire published text to extract the text data instance. Alternatively, the text data instance may itself be accessible from the online corpus and provided in the obtaining.

The obtaining step may include a monitoring function which monitors the online corpus and updates a local storage of text data instances and publication dates to reflect modifications in the online corpus. Step S101 includes storing the obtained text data instances and publication dates (and/or other metadata) in a local storage.

Either as part of the obtaining, or storing S101, or at some other stage prior to training the instance language model at S104, the text data instance may be subjected to pre-processing, for example, by a data preprocessing processor 206 in Figure 2. Such pre-processing may include concatenating multi-word names with hyphens (hence a term is either a word or a hyphenated multi-word name), e.g. changing "eating disorder" into "eating-disorder". The multi-name concatenation may be based on a predefined taxonomy and/or ontology or collaboratively defined resources, such as Wikipedia and ICD taxonomies. That is to say, the pre-processing may include hyphenating any multi-word names appearing in the collective textual representations, the multi-word names being recognisable by comparison with a pre-stored or accessible list. Additional pre-processing, such as tokenisation, stop-word removal, tokenisation, case folding, and plural stemming, may also be performed.

The text data instances stored at S101 are annotated with metadata stored at step S102, e.g. a time stamp as regard to when the text data instance is published or retrieved, and/or information of the data sources from where the text data instance is obtained.

In the system of Figure 2, the text data instances and respective metadata are stored in the text data storage 205.

An exemplary storage technique for the plurality of text data instances S101 and metadata S102 is using a distributed hash table as follows (wherein corpus is the text data instance):

$$\langle\langle hash\ key\rangle,\langle corpus\rangle\rangle$$

where hash key is computed based on a check-up table of the following structure.

| ID | Time |
|---|---|
| bbc.co.uk | 10/2016 |
| | 09/2016 |
| | 08/2016 |
| bloomburg.com | 10/2016 |
| | 09/2016 |
| ... | ... |

The check-up table contains the metadata associated with the text data instance, in this example, ID of the data source and time stamp. The time stamp is based on the minimum time granularity, which in this example is one month. Length of time granularity depends on the domain. The time column should be ordered.
Hash key is then computed as follows with an off-the-shelf hash implementation.

$$HASH\Big(concatinate\big(str(ID),str(TIME)\big)\Big)$$

Such a check-up table enables other types of range queries over arbitrary period of time, with a restriction that the minimum unit should be greater than or equal to the minimum time granularity. In the above example, this is one month, though other granularity may be used.
Thus, the text data instances are stored as the value of a key value store, with the associated metadata stored in a checkup table, and the association between the two provided by key, which is a hash of (at least part of) the metadata and accesses the value. A simple example with a short section of a website is provided:

key = 2991 d8f181b0bfddd3f978ff523848e5,
value = "The board of ARM is expected to recommend shareholders accept the offer - which is around a 43% premium on its closing market value of £16.8bn on Friday.
The Cambridge-based firm designs microchips used in most smartphones, including Apple's and Samsung's."; ...

If a year's worth of text data instances from a given data source is required, given the time granularity of one month, 12 keys will be generated to retrieve the values from the distributed hash table. If a conflict is detected, linear probing is utilised to locate the available storage location for the data.
The set of data indexed by a separate "key" in the above distributed hash table becomes a basic unit of measure data, and is referred to as a text data instance. When training the instance language models, a single text data instance is used, so that there is one instance language model per text data instance. In the second response, in which a set of data instances are used to retrain a language model, multiple text data instances and/or their respective instance language models are retrieved from storage.
At step S103, an untrained language model is obtained. The untrained language model is a neural language model having a predefined network structure comprising a plurality of adjustable weights and adjustable biases. In the system of Figure 2, both the untrained and trained language models are stored in the language model storage 207, and the data instance trainer 208 executes the training of the instance language models. Figure 3 illustrates a framework of a neural language model. The model includes a projection layer 301, a hidden layer 302, and an output layer 303. The neural language model 300 of Figure 3 is three layers including one hidden layer 302, although the predefined network structure in embodiments may comprise more than one hidden layer. The input to a neural language model is a set of word vectors from the context of a target word. In training, each of a series of target words (which may be a part of, or the whole, vocabulary of the text data instance.
In Figure 3, U and W are matrix/tensor of weights to be applied on the outputs from previous layers while p, q are vector/matrix of biases to adjust the results of applying weights. Y is the output of the word embedding process (or language model generation process). It may be considered as a matrix of word vectors.

Different techniques exist for training neural language models. In embodiments, an untrained language model is stored. The network structure of the untrained language model is predefined, that is to say, it is defined before training begins at S104, in order that a consistent network structure is used for each of the instance language models, so that the instance language models and their outputs may be combined (i.e. they are dimensionally consistent). The network structure is such as illustrated in Figure 3, noting that the untrained language model contains many adjustable weights and biases that are trained (i.e. adjusted) in the training S104. The network structure may be configurable by a user via a user interface.

At S104 the text data instance language models are trained. In the system of Figure 2, the training step S104 is performed by the data instance trainer 208. This step is performed once for each text data instance, therefore, it is performed for new text data instances when they are obtained. Thus, the step S104 is not performed once as a discrete action, but is performed repeatedly on a once-per-text-data-instance basis.

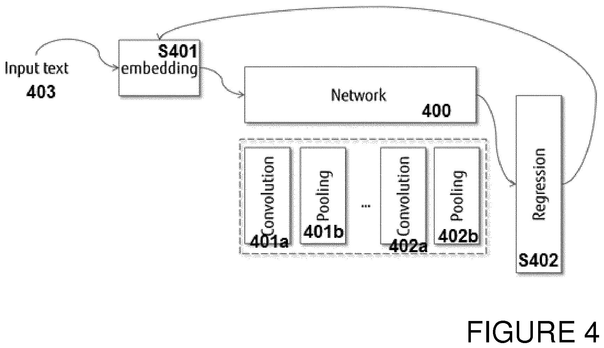

Figure 4 illustrates the procedure of training the untrained language model, exemplary of step S104. There exist in the state of the art many particular techniques for training neural language models: based on the different mechanisms to introduce the target word's context (i.e. the preceding words in the text) and the different approaches to set up and minimise the overall cost function. In this document, word context is assumed to be input to the model as input text 403 during training. The goal of training is to maximise the likelihood of the following cost function across all words (i.e. the full vocabulary) in the text data instance: where w is the target word and *context*(w) is the context of the target word in a particular text data instance, C is the text data instance.

$$L = \sum_{w \in C} \log p\big(w \big| context(w)\big)$$

It means that the goal of training is to maximise the probability of selecting the target word based on the context of the target word, or more specifically, to maximise the sum of said probabilities over all words in the vocabulary of a text data instance.

It is noted that, throughout this document, where words or terms, or series/sentences/sequences/multiples etc thereof, are referred to as being input to a language model, it may actually be an initial vector representation of the word that is input. An example of such an initial vector representation is a one-hot vector vector version of the word that is input. In the one-hot version, each word in the vocabulary (in this context the vocabulary is all stored text data instances) is assigned a dimension in one-hot vector, so the one-hot vector for a given word is simply all 0 with the exception of a 1 at the assigned dimension. This casting of input text as a one-hot vector is the embedding of S401. One-hot representation is a way of initialising the word vectors. The word vectors may also be initialised with random values.

Each text data instance (if the size is sufficiently large) is used separately to train the untrained language model and thus to obtain a separate instance language model per text data instance. During training, each target word (i.e. each word in the vocabulary) is used to train the language model on a per-appearance basis because the context may change at each appearance. The vector form of the input text is submitted to the untrained (or partially trained) network 400. In the particular example of Figure 4, a convolutional neural network 401a-402b is illustrated. Embodiments may include a convolutional neural network, an artificial neural network, or other neural network structures. In the example of Figure 4, the weights and biases of the or each convolution layer 401a, 402a, and pooling layer 401b, 402b, are adjusted at the regression step S402, for example, by using a gradient descent training technique, in which the adjustable parameters are updated by taking steps proportional to the negative of the gradient of the cost function.

A particular example of the training process is as follows: Input to the training process is free text with shallow parsing. When the training process considers a word, it normally takes the natural sequence of N words before and after the occurrences/appearances of the target word to reflect their influence on the target words. This is normally referred to as "word context". The training process then randomly initialises the word vector for further processing. Depending on the actual predefined network structure, the training process will apply the weights and biases at each layer based on the input sequence of words, so as to mimic the sequence of input text. The last layer will try to compare the output of the network to pre-labelled data and compute the difference as the cost of the overall model. The difference is then used as target for adjusting weights and biases at each previous layer. Based on a predefined condition (e.g. the cost is smaller than a predefined threshold), learning loop terminates.

As an example, the instance language models may be trained using open source neural network libraries, e.g. Word2Vec. Such systems/libraries normally take the responsibility of memory and CPU management. Inputs to train the language model are free text, with the embedding performed in the model. Normally simple NLP (natural language processing) techniques are applied as pre-processing to perform tasks such as plural folding, tokenisation, tense folding, etc. Model hyperparameters are defined by users as the predefined network structure of the untrained language model.

Such parameters include one or more from among: size of final word vector (normally 200-300), training batch size, number of epochs, learning rate, etc.

Depending on the actual network model (e.g. convolutional neural network model or recurrent neural network model), other parameters may be defined. Embodiments then take processed text, and train weights and biases at each layer of the neural network structure until a pre-set termination conditions (e.g. e.g. the cost is smaller than a predefined threshold) are met.

The trained model refers to the values assigned to the adjustable weights and biases at each layer and the predefined network structure. Word vectors are considered a by-product of the model training process and may sometimes be used directly for computing word relationships.

Optionally, only the instance language model, or both the instance language model and the resultant word vectors for the vocabulary of the text data instance, are stored. For storage efficiency, an exemplary storage technique in the storage of instance language models is a differential storage technique: in the storage of instance language models, a base model is selected (either randomly or being the latest one), other instance language models are stored in differential model, only the numeric differences with regard to the base model are stored in a physical storage. It is noted that, due to the network structure of the instance language models being stored in the form of the untrained language model, the storage of the trained instance language model may be a vector of real numbers, each real number being an adjustable weight or bias in the network structure.

Similarly, word vectors may also be stored in a differential model, also, in the system of Figure 2, in the language model storage 207. That is to say, in addition to storing an instance language model per text data instance, the word vectors for words appearing in said text data instance generated by said instance language model may also be stored. For each word appearing in multiple text data instances, one of the multiple text data instances may be assigned as a base, the entire word vector (a series of real numbers of dimensionality determined by the predefined network structure) stored in association with the base model, and for the remaining instance language models, the word vector is stored in differential form with respect to the base model. For instance, assuming the base word vector of a particular word $w\_i0$ is [0.345, 0.465, ...], model j conclude the word vector should be [0.345, 0.500, ...]. Instead of storing the complete vector of model j, $w\_ij$ becomes [0, 0.035, ...]. This applies to other parameter matrices as well.

At step S105, via an API from another application or directly from a user via a user interface, a request for a word vector is received. In the system of Figure 2, step S105 is received by the end user UI/query handler 216. The request may specify a set of text data instances by setting a range of metadata values. Alternatively, no such specification is made, embodiments thus revert to a default assumption that all text data instances are to be used. The text data instances so specified, or arrived at by default, may be referred to elsewhere in this document as a set of text data instances from among the plurality of text data instances.

It is noted that the request may not be a direct request for a word vector, but may be a query for a list of terms for which a word vector is required in order to respond to the query. This will depend on the environment in which the embodiment is implemented.

At step S106, instance weightings are calculated. In the system of Figure 2, step S106 is performed by either or both of the naïve model combiner 212 and the model retrainer 210. The instance weightings are dynamic and based on the metadata of the respective text data instance and optionally also on information provided in the query or request. For example, if a particular date or period of time of interest is specified in the query or request, then the instance weightings may be calculated by a time decaying function in which the time difference between the publication date of the text data instance indicated in the respective metadata and the date or period of time of interest specified in the query or request is input to the time decaying function to obtain the instance weighting. If no time of interest is specified, embodiments take the date/time of request as the time of interest, so that more recently-published text data instances are given higher instance weightings.

At S107a and S107b, a response to the request is generated. Either or both of S107a and S107b is performed by embodiments in response to a received request.

A typical application may be for a knowledge extraction query to be received at S105 and for topic based information retrieval. Embodiments include an interface and mechanism to allow users to search the stored plurality of text data instances with simple keywords as queries. For instance, the stored text data instances may contain documents of a particular medical domain, so the physicians may search or browse through the repository to find the documents they need.

Embodiments may include a graphic user interface 216 and some input devices to enable interaction between users and the embodiment. Queries are typically generated by human users. e.g. a physician may input a particular disease name or a particular medicine that she or he wants to acquire more information contained in the stored text data instances.

Depending on the implementation of the interface, the queries may be in natural language, e.g. "give me the treatment for Parkinson". A simple text parser of an embodiment may take this question and convert it into a format that can be understood by computers. One example of the internal format is using tags for different entities. The above queries may be converted into "<method>treatment</method> of <entity>Parkinson</entity>".

In an alternative input example, the query may simply specify the search string: "Parkinson treatment", which is tokenised by embodiments into two words "Parkinson" and "treatment". In order to generate a list of related terms as a response, a word vector representation of the two input words is required. Output will be a list of words that satisfy an input requirement (e.g. of similar distance to "Parkinson" and also close to word "treatment"). The distance is normally computed using the real numbered word vectors using cosine distance/similarity.

Embodiments then either execute the first response or second response to find a word vector representation of the two terms. In the system of Figure 2, the word vector processor 214 determines which response to execute and the output of the generated word vector representation to the end user/query handler. An exemplary set of situations and consequent actions differentiated between and taken by embodiments, for example by the word vector processor component 214, is as follows:

The word vector processor 214 is responsible for handling the queries and computing answers based on the word vectors (as a by-product of language model). Word vectors are widely used to compute word similarity / distances and multiple words relationships (based on vector space model using distance measures such as cosine measure). The word vector processor 214 receives and analysis a query. It then differentiates three situations and triggers the first and/or second responses as appropriate:

- If the query can be answered with models trained with single data instance, it will retrieve the language model from system data storage 207 (local or network).
- If the query cannot be answer with single data instance model, it will check whether a retraining is possible (allowed by system resources),
- If no, it will instruct execution of the first response S107a first and subsequently, when resources become available, trigger the second response S107b.
- Once retraining is done in S107b, it will check whether the retraining has resulted in a significant change in word vector representation of the query string (based on simple numeric distances such as cosine distance).
- If the change is significant, it will re-compute the queries and push the results to the end users.

If word vectors are stored, then embodiments may lookup the tagged keywords on a large word vector "table"/"matrix". Otherwise, the words may be forward propagated through the set of instance language models specified in the request (or the default set of all instance language models). This step should conclude with a two word vector (of real numbers with dimension of typically 200-300). The vector dimension depends on the parameters defined during word embedding or language model training process.

Many different methods may be used for using the word vectors to respond to the query, dependent upon the nature of the query. One method is to use word analogy, e.g. computing the distance between word vectors of "treatment" and "Parkinson" and then cluster words based on this distance.

In the particular example of how the word vectors output by the first and/or second response may be exploited, embodiments may include, or be suitable for, receiving an input selection of two terms, such as "Parkinson" and "treatment"; executing vector distance metrics on the word vectors of the two terms to compute a distance between the two terms in the plurality of published documents; and clustering words based on the distance (i.e. find pairs of words within a threshold distance of one term or the other and separated from another word by the computed distance, the word and separated another word being a possible analogy of the two input terms).

When an instance language model is used, the inputs are a sentence (consisting individual words), the words are embedded into vectors and then at each layer multiplied by weights and adding the biases. In case of classification, a softmax layer may be applied.

As a further example of how the term vectors may be exploited, methods may include, or be suitable for, receiving an input selection of one term along with a specification of a set of text data instances (for example, limited by date, or by a minimum acceptable publication reputation quantification); performing vector distance metrics on the word vector of the one term with the term vector to find the n (n being a positive integer which may be predefined or may be selectable at the user interface) closest word vectors in the specified text data instances; and outputting the words having the n closest word vectors, either to the user via the user interface or to a search engine or medical document search facility.

In other words, the output terms, which are those that have word vectors similar to the input word, may be used to enrich information retrieval including the input term. In this way, related literature that may not otherwise be included the query results can be returned in response to the query. For example, in an example in which the document corpus is of published medical research, two side effects represented by term A and term B may be revealed to commonly co-occur by the method of an embodiment, and hence have similar term vectors. A search for documents related to one of the side effects may be enriched by also for searching for documents relating to the other of the side effects (since there may common causation etc).

Instance language models are combined in responding to received requests. The form of the combination may be either or both of a first response S107a and a second response S107b. The first response S107a comprising obtaining a word vector representation of the query string from the instance language model stored in association with each text data instance among the set, and calculating a weighted average of the obtained word vector representations by using the respective instance weighting to weigh the word vector representation from each text data instance among the set, and outputting the weighted average (as a word vector representation of the query string). In the system of Figure 2, the first response step S107a is performed by the naïve model combiner 212. The second response S107b comprising combining the instance language model for each text data instance among the set to obtain a set language model, the set language model being a neural language model having the predefined network structure, and retraining the set language model by adjusting the adjustable weights and biases with input word sequences from the set of text data instances to obtain a retrained set language model, being a neural language model having the predefined network structure, and outputting a word vector representation of the query string generated by the retrained set neural language model. In the system of Figure 2, the second response S107b is performed by the model retrainer 210.

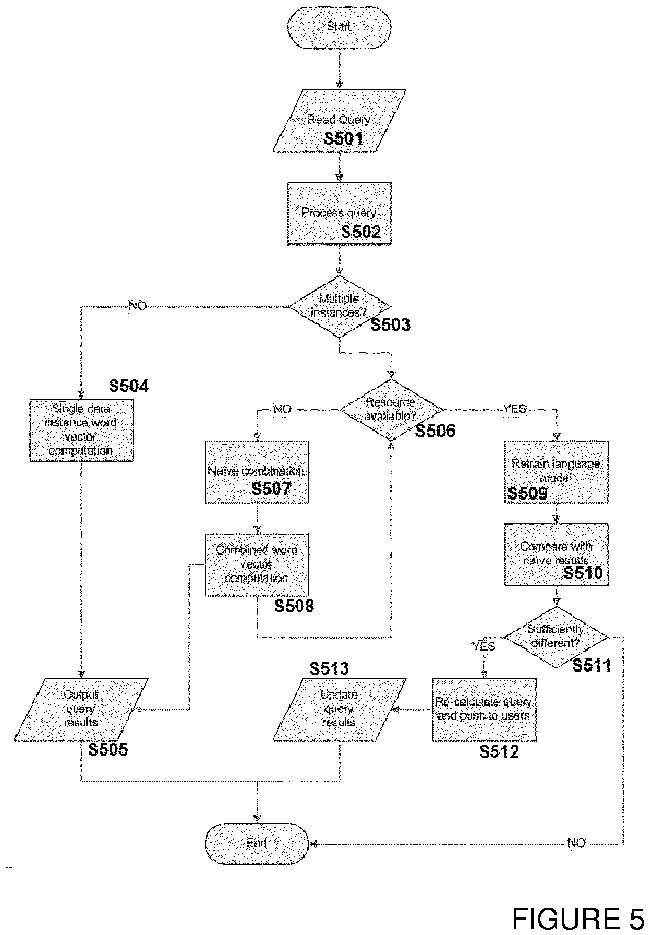

Embodiments aggregate/combine multiple instance language models trained against individual text data instances to provide answers to queries over multiple text data instances. Figure 5 illustrates a flow of control in a query handling procedure.

At S501 a query is received, for example, read from a user interface or from an API. The query specifies a query string, i.e. one or more keywords of interest, and optionally a query scope, i.e. one or more text data instances from which the word vector(s) are to be obtained. A query scope of all stored text data instances may be assumed if none is specified. An example of such a query is to retrieve word vectors or word similarity based word vectors across all different periods from a specific data source (e.g. a website) (as a combined model of those trained against text data instances from individual unit date granularity) or with regard to all the data from multiple data sources on a particular date, e.g. 082016 (including those word vectors learnt based on data from different sources, e.g. from several websites or issues of academic journals). At S502, the received query is processed. This may include natural language processing if the embodiment supports natural language queries. At S502, embodiments compose an execution plan for the query which includes the retrieval of one or more word vectors from the instance language models.

At S503, the execution plan is checked for existence of a request for retrieval of a word vector across multiple text data instances (that is, a word vector representing a word as it occurs in a set of more than one text data instances from among the plurality of stored text data instances). In such cases, instance model language combination is necessary, and the flow proceeds to S506. Should the execution plan only require retrieval of a word vector representing a word or term in a single text data instance, the flow proceeds to S504.

At S504, a word vector is obtained from the instance language model of the queried text data instance. This obtaining may take the form of retrieval from a lookup table of word vectors generated by the instance language model for words in the vocabulary of the text data instance during training of the instance language model. Alternatively, if no such lookup table exists or if the query term does not exist in the lookup table, the query term is forward propagated by the instance language model to obtain a word vector. By either technique, at S505 the obtained word vector is output, either to the user or requesting application, or to a query handling component of the embodiment which uses the word vector in the compilation of a response to the received query.

Embodiments adopt a two-stage strategy to responding to queries across multiple text data instances (i.e. a set of text data instances), comprising one or both of the first response S107a of Figure 1, and the second response S107b of Figure 1. In Figure 5, the first response is represented by steps S507, S508, and S505; the second response is represented by steps S509, S510, S511, S512, S513, and S505.

In either response, instance weightings are obtained. In order to calculate instance weightings, metadata of the respective text data instance is quantified. The instance weightings are used to adjust the significance of individual instance language models in the combining of multiple instance language models. For instance, the instance weightings may be a time decaying value with regard to the time elapse since publication of a text data instance or a time difference between a time of interest specified in the received query and a publication date of the text data instance. The instance weightings may also be or be moderated by a reputation score of a given data source (website or academic journal).

At step S506, resource availability is checked. The resource is computing resource of the computer implementing the method or otherwise providing the computation required for the embodiment. The resource availability may be assessed in terms of a time-to-solution estimated for the second response (for example, estimated empirically by the embodiment based on past executions of the second response) and compared with a tolerable time-to-solution (i.e. a threshold time period for response) for the query which is either pre-defined, specified in the query, or determined by a quality of service agreement for the user or application. If sufficient resources are not available to perform the second response within the threshold time period for response, then the flow proceeds to step S507 and the first response is performed. Embodiments may include following the output of query results S505 from the first response with an execution of the second response, and hence following S505 the flow may proceed to S509. If sufficient resources are available to execute the second response and output query results at S513 within the threshold time period for response, then the flow proceeds to S509.

An exemplary technique for performing the first response, S507, S508, S505, will now be set out. In outline, the technique is to combine word vectors for the query string (each word separately) as a weighted average of the word vector from each instance language model of the text data instances included in the query scope. At steps S507 to S508, instance weightings are used to adjust the vector values in the word vectors obtained from each instance language model of text data instances included in the query scope, the instance weightings being based on metadata of the respective text data instance (**D**).

$$\mathbf{v}' = \sum_{D \in \mathbf{D}} \left( \sum_{c \in C} \mathbf{v}(c) \cdot w_D \right)$$

where v' is the weighted average word vector (i.e. combined result), D is the set of text data instances in the query scope, and c is the dimensions of the word vectors.

The first response is not computationally intensive, since no training or retraining of language models is required. Individual word vectors v are obtained from the instance language model of the queried text data instance. This obtaining may take the form of retrieval from a lookup table of word vectors generated by the instance language model for words in the vocabulary of the text data instance during training of the instance language model. Alternatively, if no such lookup table exists or if the query term does not exist in the lookup table, the query term is forward propagated by the instance language model to obtain a word vector. The approach of the first response is suited for online processing when retraining is too computationally expensive (i.e too time-consuming) to perform and delay due to retraining is not acceptable. This naïve combination approach will provide fast estimation and approximation of the final (i.e. second response) results.

At S505, the word vector representation of the query string is output. The destination of the output is implementation-specific, and may be, for example, output to an application accessing the embodiment via an API, or may be to a user via an interface. The word vector representation is also stored for comparison with second response results at S510 once resources for the second response become available (noting the return arrow from S508 to S506 in Figure 5).

When it is determined at S506 that the second response may be executed to generate query results within the threshold time period for response, for example, the resource (time and computational power) availability permits, the second response is performed, in which instance language models for the text data instances included in the query scope are retrained using metadata adjusted probabilities.

At S509, the retraining is carried out. When retraining, embodiments use a shuffled, randomly selected word sequence of the combined text data instances included in the query scope to adjust the combined weights and bias values, weighted by the respective instance weightings. The retraining step S509 updates and adjust the adjustable weights and biases, each adjustable parameter being combined as a weighted (by respective instance weightings) average from across the instance language models of text data instances included in the query scope using the combined text of the text data instances (or a randomly selected set of it) to further refine the weights and biases of the combined language model until a training criterion is satisfied (e.g. the cost function is smaller than a predefined threshold).

As the word vectors need to be considered not only in different "text context" but also with respect to different text data instances having different metadata (e.g. the time and the reputation of data sources), it is necessary therefore to revise the above target cost function used for training as follows, for use in the retraining procedure: where different text data instances can be considered as different contexts of the target word w (C being the dimensionality of the word vectors).

$$L = \sum_{w \in C} \log p(w | context_1(w), \dots, context_n(w))$$

Since embodiments assume that all the separate contexts are independent. For instance, embodiments consider the word vector in one slice of time, and thus assume that this selected time slice is independent from other time slices. In this case, the above likelihood becomes:

$$L = \sum_{w \in C} \log \frac{p(context_1(w), \dots, context_n(w) | w) p(w)}{p(context_1(w), \dots, context_n(w))}$$

This is approximated as:

$$L \approx \sum_{w \in C} \log \frac{\prod p(context_i(w)|w)}{\prod_1^{n-1} p(w)}$$

Where:

$$\log \frac{\prod p(context_i(w)|w)}{\prod_1^{n-1} p(w)} = \sum \log p(context_i(w)|w) - (n-1) \cdot \log p(w)$$

Embodiments may perform gradient maximum of the above target cost function in the retraining S509, in which case, the second component, $(n-1) \cdot \log p(w)$, can be considered as constant in derivative computation.

Metadata-based adjustment can then be introduced by adjusting the value of $p(context_i(w)|(w)$ as follows:

$$p'(context_i(w)|w) = \alpha_i \cdot \left( \prod_{u \in context_i(w)} p(u|w) \right)$$

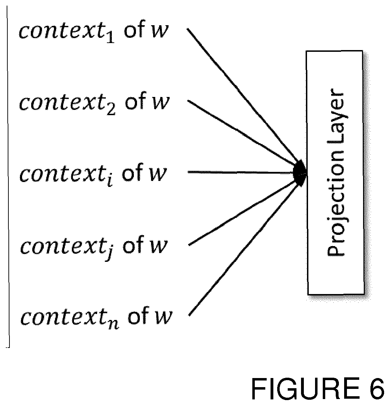

Where $\alpha_i$ is the metadata adjustment, for instance the reputation score computed against the source of a data instance and normalised across all data source or the time decaying factor computed for instance using exponential time constant as $e^{-t}$. Meanwhile, the inputs of the combined language model being retrained are the word vectors trained against individual data instances, as illustrated by Figure 6.

By maximising "L" in the above equations, embodiments will adjust the input word vectors against the adjusted overall probability of word w given its contexts in different data instances.

Either standard neural network or optimised/simplified ones (such as Word2Vec model) may be used in the solution or update of the combined language model.

The retrained language model is used to generate a word vector representation of the query string, by forward propagating the query string through the retrained language model, either as a complete string to obtain a single vector, or as individual words to obtain one word vector per word. At S510 the word vector representation of the query string obtained from the retrained language model is compared with that obtained in the first response, if the first response was performed. If the distance between the two vector representations (for example based on cosine distance) is above a threshold, then the new word vector representation is used at S512 to re-calculate the query results which are updated and output at S513. If the distance is below the threshold, the method ends with no updated output.

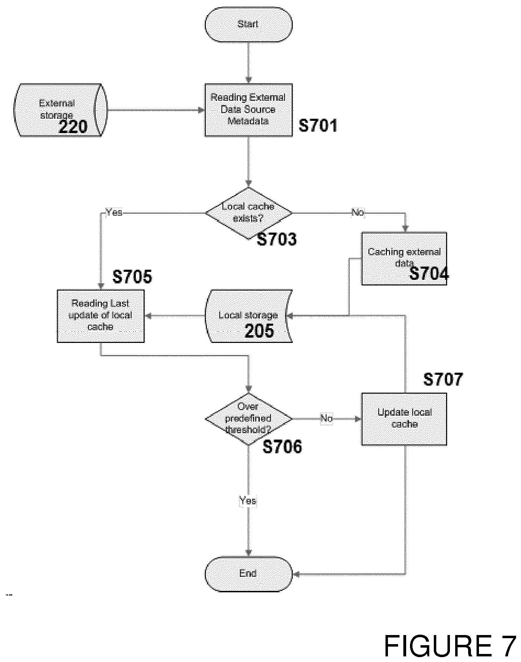

An example of obtaining the text data instances and metadata for storage at steps S101 and S102 is set out in Figure 7. In the system of Figure 2 the method of Figure 7 may be performed by the web crawler component 212.

The data collection procedure may put a strain on system performance. Figure 7 illustrates an efficient technique for collecting a large amount of online data. As illustrated in Figure 7, the data collection process (i.e. the data extracting or obtaining) may include a local caching method.

At step S701, periodically, or in response to a trigger event, the data collection process reads metadata available from one or more external data sources 220. The metadata include date/time of the latest update of the external data source 220 and/or publication date of the text data instances. At step S703, the metadata from the external data source 220 are compared with a locally cached version of the metadata from the same external data source 220 (i.e. a previously obtained version). If a locally cached version from the external data source does not exist, at step S704, the data collection process will perform data crawling and local data caching which will update local storage 205. If a local cache of the external data source exists, at S705 the data collection module will read from local storage 205 the latest update and compare against the metadata from S701.

Based on predefined criteria, at step S706, the data collection module decides whether an update of local storage is necessary. Certain updates of the external data source may be ignored and discarded due to efficiency consideration. However, if a difference (between the metadata obtained at step S701 and the locally cached version of the metadata) is over a predefined threshold, local cache will be updated at step S707. Otherwise, this cycle of external data source monitoring and querying terminates. Established algorithms are available for difference computation and may be applied by the data collection module, with the particular algorithm being implementation-dependent.

The text data instances obtained by the data collection process are stored in the local data storage 205, which may also be referred to as local storage, local memory, or local cache. The text data instances may be stored as the value element of a key-value store, with publication date as the key.

For instance, when articles retrieved from PubMed or other publication repositories may be stored in the following format:

key = 201602,
value = "α-Synuclein (α-syn) is the principal component of Lewy bodies...";
"Camptocormia is known as "bent spine syndrome" and defined as a forward hyperflexion. The most common etiologic factor is related with the movement disorders, mainly in Parkinson's disease (PD)..."; ...

The key-value store provides a mechanism to time stamp the abstracts of published documents, and to index said abstracts. Alternatively, the time stamp may be hashed to generate the key.

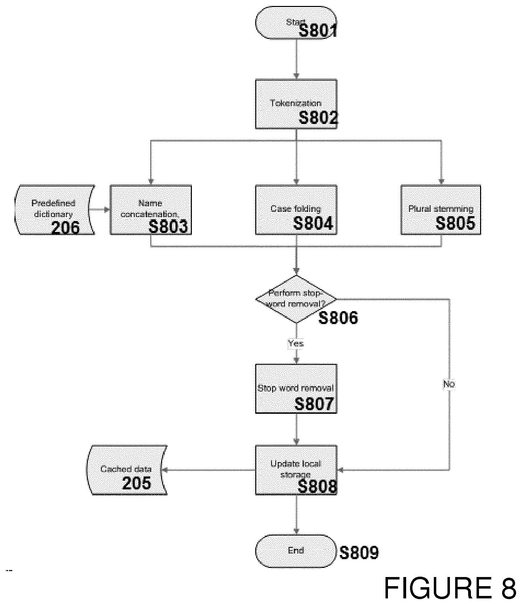

An example of the processing that may be performed by the data preprocessing processor 206 prior to training S104 is illustrated in Figure 8. The process of Figure 8 follows steps S101 and S102 and precedes step S104.

At step S801, the pre-processing procedure is started. Step S801 may be initiated by a trigger event such as the arrival of new text data instances in the local storage 205.

At step S802 a natural language processing tokenization procedure is performed on a text data instance. The tokenized text data instance is then subjected to one or more of name concatenation at step S803, case folding at step S804, and plural stemming at step S805. The name concatenation at step S803 is multi-name concatenation, and includes a reference to a predefined dictionary 220 of names which may be stored locally or may be an external dictionary accessible to the embodiment.

At step S806 it is determined whether or not to perform stop word removal. This may be defined by a user, and/or may be a default of the embodiment. If it is determined yes at step S806, then at step S807 stop word removal is performed and the procedure progresses to step S608. If it is determined no at step S806, the procedure progresses directly to step S808. At step S808, the text data instance as modified by pre-processing procedure steps S801 to S808 is committed to the local storage 205 in place of the text data instance in the form in which it was obtained from the online data source. At step S809, the pre-processing procedure of the text data instance ends and the text data instance is ready to be used to train an instance language model.

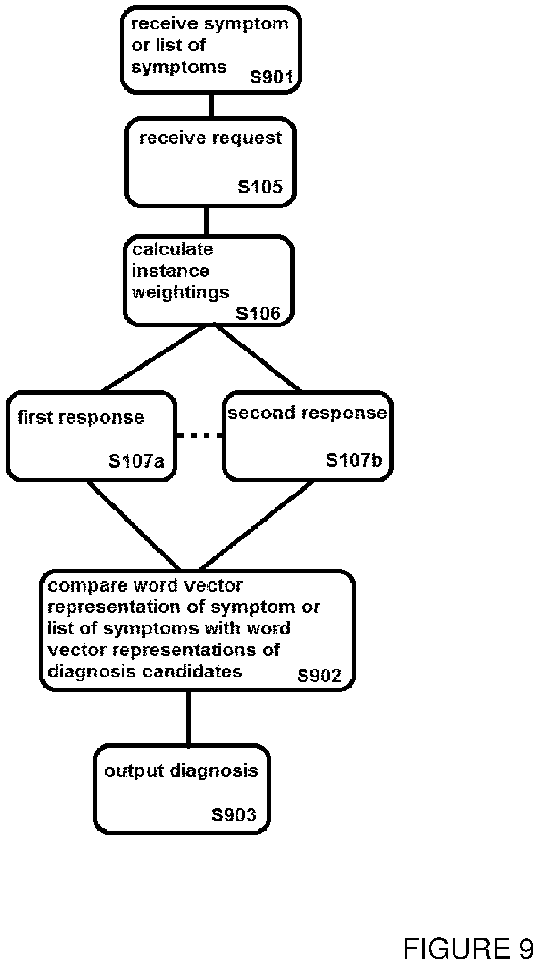

Figure 9 illustrates an example of a medical diagnosis method such as is carried out by a medical diagnosis apparatus or system. At S901 a query is received - a response to which requires a word vector representation of a symptom or list of symptoms in the context of a specified set (by journal title or date range) of medical text data instances.

Steps S105 to S107 of Figure 1 are performed.

The medical diagnosis method further comprises, at step S902, calculating a similarity between the word vector representation of the medical symptom or list of medical symptoms with a word vector representation of each of a plurality of diagnosis candidates, obtained from the same set of text data instances by, in the case of obtaining the word vector representation of the medical symptom or list of medical symptoms by the first response, repeating the first response in respect of each diagnosis candidate among the plurality of diagnosis candidates as the target text string, and in the case of obtaining the word vector representation of the medical symptom or list of medical symptoms by the second response, repeating the second response in respect of each diagnosis candidate among the plurality of diagnosis candidates as the target text string, and at S903 outputting the diagnosis candidate having the highest calculated similarity as a diagnosis.

The system may present related terms/phrases with relevancies when the physicians input a search term based on a combination of targeted models. Depending on the resource, the list of related terms/phrases may be reordered with individual scores adjusted according to fine-tuning results, or may be a single diagnosis.

For instance, in many medical domains, a symptom may be demonstrated in multiple diseases with different extend of magnitude and significance of indicating values. The word vector may be used to find diseases that are strongly associated with a symptom, by computing the distance between the word vector corresponding to the symptoms and that corresponding to the disease (being the most closely-related based on word vector representation distance).

Similarly, the word vectors may be used to identify medical treatments for diseases with the help of drug ontology. For instance, a physician can input a disease name (such as Alzheimer), the system should compute the similarities/distances between known drugs (identified using the drug ontologies) and disease. When resource permits, the distance/similarity values are then adjusted based on the publication time and data source reputation. The system then presents a list of adjusted score (as below) for the physician to study, as a response to a query (for example a query submitted at S901). It is noted that a query may be for a diagnosis or for a drug. In other words, the apparatus enables results to be filtered by type. In order to identify a result as a drug or diagnosis, a lookup table may be stored and referenced in the filtering, or an external information source may be queried in order to characterise the word. Alternatively, it may be that the word vector representation of the result itself can be used by the system to determine whether it should be classified as drug, diagnosis, or other classification. For example, by comparison with word vector representations of words known to be classified as either drug or diagnosis (summing distance from known drugs/diagnoses and classifying based on shorter summed distance).

| Alzheimer | | Schizophrenia | |
|---|---|---|---|
| Drug | similarity | Drug | similarity |
| l-dopa | 0.580 | clozapine | 0.593 |
| d-galactos | 0.575 | blonanserin | 0.562 |
| leucovorin | 0.568 | RLAI | 0.539 |
| perindopril | 0.566 | olanzapine | 0.526 |
| entacapone | 0.552 | aripiprazole | 0.521 |
| carbidopa | 0.551 | risperidone | 0.514 |
| sinemet | 0.546 | haloperidol | 0.509 |
| benserazide | 0.545 | ziprasidon | 0.507 |

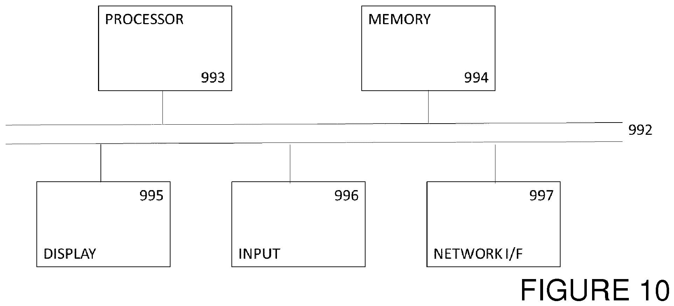

FIGURE 10 is a block diagram of a computing device which itself embodies the present invention, or which may be used to implement a method of an embodiment, singly or in cooperation with other such devices. That is, the computing device of Figure 10, alone or in combination with other such computing devices cooperatively, may perform the methods of Figures 1, 4, 5, 7, and/or 8. The computing device of Figure 10, alone or in combination with other such computing devices cooperatively, may implement the system of Figure 2. The computing device comprises a processor 993, and memory, 994. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of the method of Figure 1 or to implement the components of the system 200, and other apparatus and methods described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 997 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

The web crawler 202 of Figure 2 may be a processor 993 (or plurality thereof) executing processing instructions (a program) stored on a memory 994 and reading data from external data sources 220 via a network I/F 997. In particular, the processor 993 executes processing instructions to receive, via the network I/F, text data instances and metadata from external data sources, as in step S701 of Figure 7. Furthermore, the processor 993 may execute processing instructions to store the text data instances on a connected storage unit and/or to transmit the text data instances and metadata to the storage manager 204 for local storage.

The storage manager 204 of Figure 2 may be a processor 993 (or plurality thereof) executing processing instructions (a program) stored on a memory 994 and exchanging data via a network I/F 997. In particular, the processor 993 executes processing instructions to receive, from the web crawler 202, text data instances and respective metadata to store in the local text data storage 205 as in steps S101 and S012 of Figure 1 and S707 of Figure 7. Furthermore, the processor 993 may execute processing instructions to store the text data instances and respective metadata on a connected storage unit and/or to transmit text data instances and respective metadata to the data preprocessing processor 206 for preprocessing.

The data preprocessing processor 206 of Figure 2 may be a processor 993 (or plurality thereof) executing processing instructions (a program) stored on a memory 994 and exchanging data via a network I/F 997. In particular, the processor 993 executes processing instructions to retrieve text data instances and respective metadata from the local text data storage 205 and to preprocess the text data instances for use in training an instance language model, as in steps S801 to S807 of Figure 8. Furthermore, the processor 993 may execute processing instructions to store the resultant preprocessed text data instances on the local text data storage 205 in place of the text data instances prior to preprocessing.

The data instance trainer 208 of Figure 2 may be a processor 993 (or plurality thereof) executing processing instructions (a program) stored on a memory 994 and exchanging data via a network I/F 997. In particular, the processor 993 executes processing instructions to receive, from the data preprocessing processor 206, or to retrieve, from the local text data storage 205, text data instances and respective metadata for training the untrained language model, as in step S104 of Figure 1 or as illustrated in Figure 4. Furthermore, the processor 993 may execute processing instructions to store the trained instance language models on the local language model storage 207 or on a connected storage unit.

The model retrainer 210 of Figure 2 may be a processor 993 (or plurality thereof) executing processing instructions (a program) stored on a memory 994 and exchanging data via a network I/F 997. In particular, the processor 993 executes processing instructions to retrieve a query scope (a specification of a set of text data instances) from the word vector processor, and to retrieve instance language models of text data instances from the local language model storage 207, and to execute the model retraining as in step S107b of Figure 1 or S509 of Figure 5. Furthermore, the processor 993 may execute processing instructions to store the retrained combined language model on a connected storage unit for use by the word vector processor 214 in generating a query response.

The naïve model combiner 212 of Figure 2 may be a processor 993 (or plurality thereof) executing processing instructions (a program) stored on a memory 994 and exchanging data via a network I/F 997. In particular, the processor 993 executes processing instructions to retrieve a query scope (a specification of a set of text data instances) from the word vector processor, to retrieve instance language models within the query scope, and/or to retrieve word vectors for words in the query string from local storage 207 and combine the word vectors obtained from instance language models in the query scope as in the first response S107a of Figure 1 or S508 of Figure 5.

The end user UI/query handler 216 of Figure 2 may be a processor 993 (or plurality thereof) executing processing instructions (a program) stored on a memory 994 and exchanging data via a network I/F 997. In particular, the processor 993 executes processing instructions to receive, via the network I/F, a query from an end user or application specifying a query string for which word vector representation is required and query scope in terms of a set of text data instances, and to parse the received query as in step S501 and S502 of Figure 5. Furthermore, the processor 993 may execute processing instructions to transmit, to the word vector processor 214, a request for a word vector representation of the query string from a specified set of text data instances.

The word vector processor 214 of Figure 2 may be a processor 993 (or plurality thereof) executing processing instructions (a program) stored on a memory 994 and exchanging data via a network I/F 997. In particular, the processor 993 executes processing instructions to receive, from the end user UI/query handler 216 , a request for a word vector representation of the query string from a specified set of text data instances and determine how to respond to the request, and to coordinate the response, as in steps S503, S505, S506, S510, S511 and S513 of Figure 5. Furthermore, the processor 993 may execute processing instructions to store the output word vector representations on a connected storage unit and/or to transmit, via the network I/F 997, the output word vector representations to an end user or application or query handler for further processing.

Methods embodying the present invention may be carried out on a computing device such as that illustrated in Figure 10. Such a computing device need not have every component illustrated in Figure 10, and may be composed of a set of those components. A method embodying the present invention may be carried out by a single computing device in communication with one or more data storage servers via a network. The computing device may be a data storage itself storing the text data instances, metadata, and instance language models (and other language models), and/or word vectors.

A method embodying the present invention may be carried out by a plurality of computing devices operating in cooperation with one another. One or more of the plurality of computing devices may be a data storage server storing at least a portion of the text data instances, metadata, and instance language models (and other language models), and/or word vectors.

**Claims**

1. A computer-implemented method comprising:

   storing plural text data instances, each text data instance among the plural text data instances being a published text document or documents from a text data source;
   storing metadata in respect of each text data instance among the plural text data instances;
   obtaining an untrained language model, the untrained language model being a neural language model comprising a plurality of adjustable weights and adjustable biases;
   in respect of each individual text data instance among the plural text data instances, training the untrained language model by adjusting the adjustable weights and biases with input word sequences from the respective text data instance to obtain an instance language model that is configured to generate a word vector representation of an input text string, and storing the instance language model in association with the respective text data instance;
   receiving a request for a word vector representation of a target text string in a set of text data instances from among the plural text data instances;
   responding to the request by:

      in respect of each individual text data instance among the set, calculating an instance weighting from the respective metadata; and
      either or both of:

         a first response, comprising obtaining a word vector representation of the target text string from the instance language model stored in association with each text data instance among the set, and calculating a weighted average of the obtained word vector representations by using the respective instance weighting to weigh the word vector representation from each text data instance among the set, and outputting the weighted average in response to the request; and
         a second response, comprising combining the instance language model for each text data instance among the set to obtain a set language model, and retraining the set language model by adjusting the adjustable weights and biases with input word sequences from the set of text data instances to obtain a retrained set language model, and outputting a word vector representation of the query string generated by the retrained set neural language model in response to the request.

2. The computer-implemented method according to claim 1, wherein

   the metadata stored in respect of each text data instance includes a representation of a publication date of the text data instance; and
   calculating the instance weighting comprises calculating, as the instance weighting, a value of a function decreasing as a time period increases, the time period being a length of time between the date of publication represented in the metadata of the individual text data instance and a time of interest defined by the received request.

3. The computer-implemented method according to claim 1 or 2, wherein
   upon receiving the query, performing a check of availability of system resources and, in dependence upon an outcome of the performed check, calculating an estimate of a time required to perform the second response; and
   if the estimate is above a threshold: performing the first response and performing the second response, wherein the output word vector output by the second response is output in response to the query on condition of a distance between the weighted average and the output word vector being above a threshold; and
   if the estimate is below the threshold: performing the second response.

4. The computer-implemented method according to any of the preceding claims, further comprising:

obtaining text content from a website and storing the obtained text content as a text data instance among the plural text data instances, including adding the date of the obtaining to the respective metadata as the publication date of the text data instance.

5.  The computer-implemented method according to claim 4, wherein
for one or more websites or journals, the obtaining is performed periodically so that plural versions of text content from the one or more websites are stored.

6.  The computer-implemented method according to claim 5, wherein
the plural text data instances are stored in a key value store with the key being a hash of a concatenation of an identifier of the website and an indication of the date of the obtaining, and the value being the text data instance.

7.  The computer-implemented method according to claim 5 or 6, wherein
the instance language models trained and stored in respect of different versions of text content from the same data source are stored in differential model from a base model, the base model being either the instance language model trained in respect of the most recently obtained version of the text content, or a randomly selected instance language model from among the instance language models trained and stored in respect of different versions of text content from the data source.

8.  The computer-implemented method according to any of the preceding claims, wherein
the stored metadata in respect of each text data instance among the plural text data instances includes a quantification of reputation of the data source from which the respective text data instance is obtained; and
calculating the instance weighting in respect of each individual text data instance includes moderating the value of the function with the respective quantification of reputation.

9.  The computer-implemented method according to claim 1, wherein
combining the instance language model for each text data instance among the set to obtain a set language model is in accordance with the respective instance weighting; and/or
comprises, for each adjustable weight and bias in the predefined network structure, calculating a weighted average of the weight or bias in the instance language model in respect of each text data instance in the set, weighted according to the respective instance weighting.

10. A medical diagnosis method, comprising:

the computer-implemented method of claim 1, in which the text data source is a corpus of medical publications and the text data instances are articles and/or journal issues from among the corpus;
the target text string is a medical symptom or list of medical symptoms and is specified in a received query;
the medical diagnosis method further comprising:

calculating a similarity between the word vector representation of the medical symptom or list of medical symptoms with a word vector representation of each of a plurality of diagnosis candidates, obtained from the same set of text data instances by, in the case of obtaining the word vector representation of the medical symptom or list of medical symptoms by the first response, repeating the first response in respect of each diagnosis candidate among the plurality of diagnosis candidates as the target text string, and in the case of obtaining the word vector representation of the medical symptom or list of medical symptoms by the second response, repeating the second response in respect of each diagnosis candidate among the plurality of diagnosis candidates as the target text string, and outputting the diagnosis candidate having the highest calculated similarity as a diagnosis.

11. An apparatus comprising:

a memory;
a processor coupled to the memory and configured to execute a process comprising:

storing plural text data instances, each text data instance among the plural text data instances being a published text document or documents from a text data source;
storing metadata in respect of each text data instance among the plural text data instances;
obtaining an untrained language model, the untrained language model being a neural language model comprising a plurality of adjustable weights and adjustable biases;

in respect of each individual text data instance among the plural text data instances, training the untrained language model by adjusting the adjustable weights and biases with input word sequences from the respective text data instance to obtain an instance language model that is configured to generate a word vector representation of an input text string, and storing the instance language model in association with the respective text data instance;

receiving a request for a word vector representation of a target text string in a set of text data instances from among the plural text data instances;

responding to the request by:

in respect of each individual text data instance among the set, calculating an instance weighting from the respective metadata; and
either or both of:

a first response, comprising obtaining a word vector representation of the query string from the instance language model stored in association with each text data instance among the set, and calculating a weighted average of the obtained word vector representations by using the respective instance weighting to weigh the word vector representation from each text data instance among the set, and outputting the weighted average in response to the request; and

a second response, comprising combining the instance language model for each text data instance among the set to obtain a set language model, and retraining the set language model by adjusting the adjustable weights and biases with input word sequences from the set of text data instances to obtain a retrained set language model, being a neural language model having the predefined network structure, and outputting a word vector representation of the query string generated by the retrained set neural language model in response to the request.

**12.** A medical diagnosis apparatus, comprising the apparatus of claim 11, wherein:

the text data source is a corpus of medical publications and the text data instances are articles and/or journal issues from among the corpus;
the target text string is a medical symptom or list of medical symptoms and is specified in a received query;
the process executed by the processor further comprising:

calculating a similarity between the word vector representation of the medical symptom or list of medical symptoms with a word vector representation of each of a plurality of diagnosis candidates, obtained from the same set of text data instances by, in the case of obtaining the word vector representation of the medical symptom or list of medical symptoms by the first response, repeating the first response in respect of each diagnosis candidate among the plurality of diagnosis candidates as the target text string, and in the case of obtaining the word vector representation of the medical symptom or list of medical symptoms by the second response, repeating the second response in respect of each diagnosis candidate among the plurality of diagnosis candidates as the target text string, and outputting the diagnosis candidate having the highest calculated similarity as a diagnosis.

**13.** A computer program which, when executed by a computing device, causes the computing device to perform the method according to any of claims 1 to 10.

**14.** A non-transitory computer-readable storage medium storing the computer program according to claim 13.

```
┌─────────────────┐        ┌─────────────────┐
│ store text data │        │ store metadata  │
│ instances       │        │                 │
│          S101   │        │          S102   │
└─────────────────┘        └─────────────────┘
         \                    /
          \                  /
         ┌─────────────────────┐
         │ obtain untrained    │
         │ language model      │
         │            S103     │
         └─────────────────────┘
                    │
         ┌─────────────────────┐
         │ training            │
         │                     │
         │            S104     │
         └─────────────────────┘
                    │
         ┌─────────────────────┐
         │ receive request     │
         │                     │
         │            S105     │
         └─────────────────────┘
                    │
         ┌─────────────────────┐
         │ calculate           │
         │ instance            │
         │ weightings          │
         │            S106     │
         └─────────────────────┘
            /              \
           /                \
┌─────────────────┐   ┌─────────────────┐
│ first response  │···│ second response │
│                 │   │                 │
│          S107a  │   │          S107b  │
└─────────────────┘   └─────────────────┘
```

# FIGURE 1

FIGURE 2

FIGURE 3

FIGURE 4

FIGURE 5

$context_1$ of $w$

$context_2$ of $w$

$context_i$ of $w$

$context_j$ of $w$

$context_n$ of $w$

Projection Layer

# FIGURE 6

Start

External storage **220**

Reading External Data Source Metadata **S701**

Local cache exists? **S703**

Yes

No

Caching external data **S704**

**S705**

Reading Last update of local cache

Local storage **205**

**S707**

Over predefined threshold? **S706**

No

Update local cache

Yes

End

# FIGURE 7

FIGURE 8

FIGURE 9

PROCESSOR

993

MEMORY

994

992

DISPLAY 995

INPUT 996

NETWORK I/F 997

FIGURE 10

Europäisches
Patentamt
European
Patent Office
Office européen
des brevets

**EUROPEAN SEARCH REPORT**

Application Number

EP 17 16 0966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HU BO ET AL: "Building a Mental Health Knowledge Model to Facilitate Decision Support", 7 August 2016 (2016-08-07), NETWORK AND PARALLEL COMPUTING; [LECTURE NOTES IN COMPUTER SCIENCE; LECT.NOTES COMPUTER], SPRINGER INTERNATIONAL PUBLISHING, CHAM, PAGE(S) 198 - 212, XP047352339, ISSN: 0302-9743 ISBN: 978-3-642-01523-6 [retrieved on 2016-08-07] * Sections 1, 3 and 4.1 * | 1-14 | INV. G06F17/27 G06N3/02 |
| A | US 9 037 464 B1 (MIKOLOV TOMAS [US] ET AL) 19 May 2015 (2015-05-19) * the whole document * | 1-14 | |

TECHNICAL FIELDS SEARCHED (IPC)

G06F
G06N

The present search report has been drawn up for all claims

| Place of search | Date of completion of the search | Examiner |
|---|---|---|
| Berlin | 31 August 2017 | Abram, Robert |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 17 16 0966

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2017

| Patent document cited in search report | | Publication date | Patent family member(s) | | Publication date |
|---|---|---|---|---|---|
| US 9037464 | B1 | 19-05-2015 | US<br>US | 9037464 B1<br>9740680 B1 | 19-05-2015<br>22-08-2017 |